(19) Europäisches Patentamt
European Patent Office
Office européen des brevets

(11) **EP 2 243 364 B1**

(12) **EUROPÄISCHE PATENTSCHRIFT**

(45) Veröffentlichungstag und Bekanntmachung des Hinweises auf die Patenterteilung:
**08.04.2015 Patentblatt 2015/15**

(21) Anmeldenummer: **10158917.4**

(22) Anmeldetag: **09.05.2001**

(51) Int Cl.:
*A01N 43/824* (2006.01)    *A01N 43/836* (2006.01)
*A01N 43/82* (2006.01)    *A01P 13/02* (2006.01)
*A01N 25/32* (2006.01)    *A01N 37/46* (2006.01)
*A01N 39/02* (2006.01)    *A01N 43/18* (2006.01)
*A01N 43/42* (2006.01)    *A01N 43/50* (2006.01)
*A01N 43/54* (2006.01)    *A01N 43/76* (2006.01)
*A01N 43/80* (2006.01)    *A01N 43/86* (2006.01)
*A01N 43/90* (2006.01)    *A01N 47/36* (2006.01)
*A01N 47/38* (2006.01)

(54) **Selektive Herbizide auf Basis von Heteroaryloxy-acetamiden**

SELECTIVE HETEROARYLOXY-ACETAMIDE-BASED HERBICIDES

HERBICIDES SELECTIFS A BASE D'HETEROARYLOXY-ACETAMIDES

(84) Benannte Vertragsstaaten:
**AT BE CH CY DE DK ES FI FR GB GR IE IT LI LU MC NL PT SE TR**

(30) Priorität: **22.05.2000 DE 10025306**
**24.08.2000 DE 10041619**

(43) Veröffentlichungstag der Anmeldung:
**27.10.2010 Patentblatt 2010/43**

(62) Dokumentnummer(n) der früheren Anmeldung(en) nach Art. 76 EPÜ:
**05005219.0 / 1 552 746**
**01943335.8 / 1 298 996**

(73) Patentinhaber: **Bayer Intellectual Property GmbH**
**40789 Monheim am Rhein (DE)**

(72) Erfinder:
• **Feucht, Dieter, Dr.**
**65760 Eschborn (DE)**
• **Dahmen, Peter, Dr.**
**41470 Neuss (DE)**
• **Drewes, Mark, Dr.**
**40764 Langenfeld (DE)**
• **Pontzen, Rolf, Dr.**
**42799 Leichlingen (DE)**
• **Kremer, Mathias, Dr.**
**1000 San Jose (CR)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
**EP-A- 1 123 654    WO-A-94/02014**
**WO-A-96/11575    DE-A1- 19 728 568**
**US-A- 5 858 920    US-A- 5 945 379**
**US-A- 6 001 774**

Bemerkungen:
Die Akte enthält technische Angaben, die nach dem Eingang der Anmeldung eingereicht wurden und die nicht in dieser Patentschrift enthalten sind.

EP 2 243 364 B1

## Beschreibung

Die Erfindung betrifft neue selektiv-herbizide, synergistische Wirkstoffkombinationen, die aus einem bekannten Heteroaryloxy-acetamid einerseits und einer bekannten, herbizid wirksamen Verbindung und gegebenenfalls die Kulturpflanzen-Verträglichkeit verbessernden Verbindungen andererseits bestehen und mit besonders gutem Erfolg zur selektiven Unkrautbekämpfung in verschiedenen Nutzpflanzenkulturen verwendet werden können.

Heteroaryloxyacetamide sind als starke, besonders gegen monokotyle Unkräuter wirksame Herbizide Gegenstand einer Reihe von Patentanmeldungen (vgl. EP-A 5501, EP-A 18497, EP-A 29171, EP-A 94514, EP-A 100044, EP-A 100045, EP-A 161602, EP-A 195237, EP-A 348734, EP-A 348737, DE-A 4317323). Die Wirkung dieser Verbindungen und/oder ihre Verträglichkeit gegenüber Kulturpflanzen sind jedoch nicht immer ganz zufriedenstellend.

Weiter sind Wirkstoffkombinationen aus Heteroaryloxy-acetamiden und anderen herbizid wirksamen Verbindungen zum Erzielen einer synergistischen Wirkung (vgl. WO-A 94/02014, WO-A-96/07323, WO-A-96/11575, WO-A-96/17519, WO-A-98/08383, vgl. auch US-A-5858920, US-A-5945379, US-A-5985797, EP-A 1123654, US-A 6001774) bzw. aus Heteroaryloxy-acetamiden und Verbindungen, welche die Kulturpflanzen-Verträglichkeit von Herbiziden verbessern können (vgl. DE-A 3418167, vgl. auch US-A-5858920) bekannt geworden. Auch bei diesen Kombinationsprodukten sind jedoch die Anwendungseigenschaften nicht immer vollständig befriedigend.

Überraschenderweise wurde nun gefunden, dass ein bekannter Wirkstoff aus der Reihe der Heteroaryloxy-acetamide bei gemeinsamer Anwendung mit einer bekannten herbizid wirksamen Verbindung und gegebenenfalls die Kulturpflanzen-Verträglichkeit verbessernden Verbindungen ausgesprochen synergistische Effekte hinsichtlich der Wirkung gegen Unkräuter zeigt und/oder die Kulturpflanzen-Verträglichkeit signifikant verbessert und besonders vorteilhaft als breit wirksames Kombinationspräparat zur selektiven Bekämpfung von Unkräutern in Nutzpflanzenkulturen, wie z.B. in Baumwolle, Gerste, Mais, Kartoffeln, Raps, Reis, Soja, Sonnenblumen, Weizen und Zuckerrohr verwendet werden kann.

Gegenstand der Erfindung sind selektiv-herbizide Mittel, gekennzeichnet durch einen wirksamen Gehalt an einer Wirkstoffkombination bestehend aus

(a) Verbindung N-i-Propyl-N-(4-fluor-phenyl)-α-(5-trifluormethyl-1,3,4-thiadiazol-2-yl-oxy)-acetamid (Flufenacet) ("Wirkstoff der Gruppe 1") und

(b) der Verbindung 2-[4,5-dihydro-4-methyl-4-(1-methylethyl)-5-oxo-1H-imidazol-2-yl]-5- (methoxymethyl)-3-pyridincarbonsäure (Imazamox) ("Wirkstoff der Gruppe 2").

Der Wirkstoff der Gruppe 1 ist in den oben angegebenen Patentanmeldungen bzw. Patentschriften beschrieben.

Der Wirkstoff der Gruppe 2 kann seiner chemischen Struktur entsprechend folgender Wirkstoffklasse zugeordnet werden:

Imidazolinone (z.B. Imazamox).

Es wurde nun überraschend gefunden, dass die oben definierten Wirkstoffkombinationen aus Heteroaryloxy-acetamid und dem Wirkstoff der Gruppe 2 bei weitgehend guter Nutzpflanzen-Verträglichkeit eine besonders hohe herbizide Wirksamkeit aufweisen und in verschiedenen Kulturen, insbesondere in Gerste, Kartoffeln, Mais, Reis, Soja und Weizen zur selektiven Bekämpfung von monokotylen und dikotylen Unkräutern verwendet werden können und dass sie auch zur Bekämpfung von monokotylen und dikotylen Unkräutern im semi- und nicht-selektiven Bereich verwendet werden können.

Überraschenderweise ist die herbizide Wirksamkeit der erfindungsgemäßen Wirkstoffkombinationen erheblich höher als die Summe der Wirkungen der einzelnen Wirkstoffe.

Es liegt somit ein nicht vorhersehbarer synergistischer Effekt vor und nicht nur eine Wirkungsergänzung. Die neuen Wirkstoffkombinationen sind in vielen Kulturen gut verträglich, wobei die neuen Wirkstoffkombinationen auch sonst schwer bekämpfbare Unkräuter gut bekämpfen. Die neuen Wirkstoffkombinationen stellen somit eine wertvolle Bereicherung der Herbizide dar.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Gruppe 1 0,01 bis 1000 Gewichtsteile, vorzugsweise 0,02 bis 500 Gewichtsteile und besonders bevorzugt 0,05 bis 100 Gewichtsteile Wirkstoff der Gruppe 2.

Als Beispiele für die erfindungsgemäßen Wirkstoffkombinationen seien genannt:

Flufenacet + Imazamox.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Pflanzenteile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhiozome aufgeführt werden. Zu den Pflanzenteilen gehört auch vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen weiterhin durch ein- oder mehrschichtiges Umhüllen.

Unter den durch biotechnologische und gentechnologische Methoden oder durch Kombination dieser Methoden erhaltenen Pflanzen werden solche Pflanzen hervorgehoben, die sog. 4-HPPD-, EPSP- und/oder PPO-Hemmstoffe tolerieren, wie z.B. Acuron-Pflanzen.

Die erfindungsgemäßen Wirkstoffe können z.B. bei den folgenden Pflanzen verwendet werden:

Dikotyle Unkräuter der Gattungen: Abutilon, Amaranthus, Ambrosia, Anoda, Anthemis, Aphanes, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Dikotyle Kulturen der Gattungen: Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia.

Monokotyle Unkräuter der Gattungen: Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum.

Monokotyle Kulturen der Gattungen: Allium, Ananas, Asparagus, Avena, Hordeum, Oryza, Panicum, Saccharum, Secale, Sorghum, Triticale, Triticum, Zea.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die erfindungsgemäß zu verwendenden Wirkstoffkombinationen können sowohl in konventionellen Anbauverfahren (Reihenkulturen mit geeigneter Reihenweite) in Plantagenkulturen (z.B. Wein, Obst, Zitrus) sowie in Industrie- und Gleisanlagen, auf Wegen und Plätzen, aber auch zur Stoppelbehandlung und beim Minimum-Tillage-Verfahren eingesetzt werden. Sie eignen sich weiterhin als Abbrenner (Krautabtötung z.B. in Kartoffeln) oder als Defoliantien (z.B. in Baumwolle). Ferner sind sind sie für den Einsatz auf Bracheflächen geeignet. Weitere Einsatzgebiete sind Baumschulen, Forst, Grünland und Zierpflanzenbau.

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methyl-isobutylketon oder Cyclohexanon, stark polare Lösungsmittel, wie Dimethylformamid und Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Oleo DuPont 11E") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die erfindungsgemäßen Wirkstoffkombinationen können vor und nach dem Auflaufen der Pflanzen appliziert werden, also im Vorauflauf und Nachauflauf-Verfahren. Sie können auch vor der Saat in den Boden eingearbeitet werden.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R.: "Calculating synergistic and antagonistic responses of herbicide combinations", Weeds 15, Seiten 20 - 22, 1967):

Wenn

X = % Schädigung durch Herbizid A (Wirkstoff der Gruppe 1) bei p kg/ha Aufwandmenge
und
Y = % Schädigung durch Herbizid B (Wirkstoff der Gruppe 2) bei q kg/ha Aufwandmenge
und
E = die erwartete Schädigung der Herbizide A und B bei p und q kg/ha Aufwandmenge,
dann ist

$$E = X + Y - (X * Y/100).$$

Ist die tatsächliche Schädigung größer als berechnet, so ist die Kombination in ihrer Wirkung überadditiv, das heißt, sie zeigt einen synergistischen Effekt.

Die Wirkstoffkombinationen der vorliegenden Erfindung weisen in der Tat die Eigenschaft auf, dass ihre gefundene herbizide Wirkung stärker ist als die berechnete, das heißt, dass die neuen Wirkstoffkombinationen synergistisch wirken.

**Patentansprüche**

1. Mittel enthaltend einen wirksamen Gehalt an einer Wirkstoffkombination bestehend aus

(a) Verbindung N-i-Propyl-N-(4-fluor-phenyl)-$\alpha$-(5-trifluormethyl-1,3,4-thiadiazol-2-yl-oxy)-acetamid (Flufenacet) ("Wirkstoff der Gruppe 1") und
(b) der Verbindung 2-[4,5-dihydro-4-methyl-4-(1-methylethyl)-5-oxo-1H-imidazol-2-yl]-5-(methoxymethyl)-3-pyridincarbonsäure (Imazamox) ("Wirkstoff der Gruppe 2").

**2.** Mittel nach Anspruch 1, **dadurch gekennzeichnet, dass** auf einen Gewichtsteil Wirkstoff der Gruppe 1 0,01 bis 1000 Gewichtsteile des Wirkstoffs oder der Wirkstoffe aus der zweiten Gruppe von Herbiziden (Komponente (b)) entfallen.

**3.** Verwendung eines Mittels gemäß einem der Ansprüche 1 und 2 zur Bekämpfung von unerwünschten Pflanzen.

**4.** Verfahren zur Bekämpfung von unerwünschten Pflanzen, **dadurch gekennzeichnet, dass** man Mittel gemäß einem der Ansprüche 1 und 2 auf die unerwünschten Pflanzen und/oder ihren Lebensraum einwirken lässt.

**5.** Verfahren zur Herstellung eines herbiziden Mittels, **dadurch gekennzeichnet, dass** man ein Mittel gemäß einem der Ansprüche 1 und 2 mit oberflächenaktiven Mitteln und/oder Streckmitteln vermischt.

**Claims**

**1.** Composition, comprising an effective amount of an active compound combination consisting of

(a) compound N-i-propyl-N-(4-fluoro-phenyl)-$\alpha$-(5-trifluoromethyl-1,3,4-thiadiazol-2-yl-oxy)-acetamide (flufenacet).
("active compound of group 1") and
(b) the compound 2-[4,5-dihydro-4-methyl-4-(1-methylethyl)-5-oxo-1H-imidazol-2-yl]-5-(methoxymethyl)-3-pyridinecarboxylic acid (imazamox)
("active compound of group 2").

**2.** Composition according to Claim 1, **characterized in that** from 0.01 to 1000 parts by weight of the active compound(s) from the second group of herbicides (component b)) are used per part by weight of active compound of group 1.

**3.** Use of a composition according to either of Claims 1 and 2 for controlling undesirable plants.

**4.** Method for controlling undesirable plants, **characterized in that** compositions according to either of Claims 1 and 2 are allowed to act on the undesirable plants and/or their habitat.

**5.** Process for preparing a herbicidal composition, **characterized in that** a composition according to either of Claims 1 and 2 is mixed with surfactants and/or extenders.

**Revendications**

**1.** Agent ayant une teneur efficace en une association de substances actives constituée

(a) du composé N-isopropyl-N-(4-fluoro-phényl)-$\alpha$-(5-trifluorométhyl-1,3,4-thiadiazol-2-yl-oxy)-acétamide (fluénacet)
(« substance active du groupe 1 ») et
(b) du composé
acide 2-[4,5-dihydro-4-méthyl-4-(1-méthyléthyl)-5-oxo-1H-imidazol-2-yl]-5-(méthoxyméthyl)-3-pyridinecarboxylique (imazamox)
(« substance active du groupe 2 »).

**2.** Agent selon la revendication 1, **caractérisé en ce que** pour une partie en poids de substance active du groupe 1 sont présentes 0,01 à 1 000 parties en poids de la substance active ou des substances actives du deuxième groupe d'herbicides (composant (b)).

**3.** Utilisation d'un agent selon l'une quelconque des revendications 1 et 2, pour la lutte contre des plantes indésirables.

**4.** Procédé pour la lutte contre des plantes indésirables, **caractérisé en ce qu'**on fait agir sur les plantes indésirables et/ou leur habitat des agents selon l'une quelconque des revendications 1 et 2.

**5.** Procédé pour la fabrication d'un agent herbicide, **caractérisé en ce qu'**on mélange un agent selon l'une quelconque des revendications 1 et 2 avec des agents tensioactifs et/ou des excipients.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 5501 A
- EP 18497 A
- EP 29171 A
- EP 94514 A
- EP 100044 A
- EP 100045 A
- EP 161602 A
- EP 195237 A
- EP 348734 A
- EP 348737 A
- DE 4317323 A
- WO 9402014 A
- WO 9607323 A
- WO 9611575 A
- WO 9617519 A
- WO 9808383 A
- US 5858920 A
- US 5945379 A
- US 5985797 A
- EP 1123654 A
- US 6001774 A
- DE 3418167 A

**In der Beschreibung aufgeführte Nicht-Patentliteratur**

- **COLBY, S.R.** Calculating synergistic and antagonistic responses of herbicide combinations. *Weeds,* 1967, vol. 15, 20-22